# EUROPÄISCHE PATENTSCHRIFT

(11) **EP 2 029 388 B1**
(45) Veröffentlichungstag und Bekanntmachung des Hinweises auf die Patenterteilung: **08.07.2015**
(21) Anmeldenummer: 07725135.3
(22) Anmeldetag: 11.05.2007
(51) Int. Cl.: B60N 2/44, B60N 2/16

(54) **VERSTELLVORRICHTUNG FÜR EINE KRAFTFAHRZEUGKOMPONENTE MIT EINEM BREMSGEHÄUSE UND VERFAHREN ZUR HERSTELLUNG UND/ODER ZUR MONTAGE EINER VERSTELLVORRICHTUNG**
ADJUSTING DEVICE FOR A MOTOR VEHICLE COMPONENT COMPRISING A BRAKE HOUSING AND METHOD FOR PRODUCING AND/OR ASSEMBLING AN ADJUSTING DEVICE
DISPOSITIF DE RÉGLAGE D'UN COMPOSANT D'UN VÉHICULE À MOTEUR, COMPRENANT UN CARTER DE FREIN ET PROCÉDÉ DE PRODUCTION ET/OU DE MONTAGE D'UN DISPOSITIF DE RÉGLAGE

(30) Priorität: 17.05.2006 DE 102006023363
(43) Veröffentlichungstag der Anmeldung: 04.03.2009
(73) Patentinhaber: Johnson Controls GmbH, 51399 Burscheid (DE)
(72) Erfinder: HAIDA, Stefan, 42855 Remscheid (DE); DANNHEISIG, Andreas, 48336 Sassenberg (DE); ENGELS, Bernd, 42897 Remscheid (DE)
(74) Vertreter: Wolff, Felix
(86) Internationale Anmeldenummer: PCT/EP2007/004215
(87) Internationale Veröffentlichungsnummer: WO 2007/131732

(56) Entgegenhaltungen:
- DE-A1- 19 500 914
- DE-A1- 19 620 281
- DE-A1- 19 726 257
- DE-A1- 19 750 262

## Beschreibung

Die vorliegende Erfindung betrifft eine Verstellvorrichtung für eine Kraftfahrzeugkomponente, insbesondere einen Fahrzeugsitz, gemäß dem Oberbegriff des Anspruchs 1.

Solche Verstellvorrichtungen sind an sich allgemein bekannt. Beispielsweise ist aus der deutschen Offenlegungsschrift DE 197 25 899 A1 eine Verstellvorrichtung bzw. ein Verstellantrieb bekannt, insbesondere für eine manuelle Höhen- oder Neigungsverstellung eines Fahrzeugsitzes. Der Antriebshebel ist mit Verriegelungsmitteln gekoppelt, die mit einer auf dem Umfang eines Antriebsrades angeordneten Verzahnung in Eingriff bringbar sind. Der Verstellantrieb weist ferner eine Bremsvorrichtung auf, die in einem Bremsgehäuse angeordnet ist. Hierbei ist als Bremsgehäuse ein tiefgezogener Topf zur Aufnahme der Bremse vorgesehen. Hierdurch ergibt sich beispielsweise der Nachteil, dass der tiefgezogene Topf des Bremsgehäuses zur Bildung desselben großflächig umgeformt werden muss, was zum einen mit einem vergleichsweise großen Aufwand verbunden ist und zum anderen mit weiterem Aufwand verbunden ist, um die erforderliche Stabilität der Verstellvorrichtung und die entsprechend Maßgenauigkeit der Verstellvorrichtung zu gewährleisten. Eine gattungsgemäße Verstellvorrichtung ist aus der DE 195 00 914 A1 bekannt.

Aufgabe der vorliegenden Erfindung ist es, eine Verstellvorrichtung für eine Kraftfahrzeugkomponente, insbesondere ein Fahrzeugsitz, anzugeben, die besonders leicht, einfach, bauraumkompakt und kostengünstig herstellbar ist und die dennoch die erforderliche Maßgenauigkeit zur Gewährleistung eines sicheren und über die gesamte Lebensdauer von typischerweise etwa 10 bis 20 Jahren in gleicher Weise funktionstüchtigen Betrieb aufweist.

Diese Aufgabe wird durch eine Verstellvorrichtung für eine Kraftfahrzeugkomponente, insbesondere ein Fahrzeugsitz, gemäß Anspruch 1 gelöst, wobei die Verstellvorrichtung ein Bremsgehäuse und eine Betätigungsdrehachse aufweist, wobei ferner das Bremsgehäuse in radialer Richtung der Betätigungsdrehachse im wesentlichen mittels eines im wesentlichen plattenförmig verlaufenden Gehäuseelementes gebildet ist. Hierdurch ist es mit einfachen Mitteln möglich, ein besonders stabiles Bremsgehäuse herzustellen, welches gerade in der Richtung in der die größten Kräfte auftreten, nämlicher in radialer Richtung der Betätigungsdrehachse, eine besonders hohe Stabilität aufweist und, wobei die Stabilität beinahe in beliebiger Weise dadurch gesteigert werden kann, dass das plattenförmige Material zur Bildung des Gehäuseelementes bei gegebener Materialstärke und bei gegebenem Innendurchmesser des Bremsgehäuses lediglich größer ausgebildet ist, so dass der um die Ausnehmung des Bremsgehäuses stehen bleibende Rand des Gehäuseelementes größer ist.

Die Verstellvorrichtung weist ein Flanschelement auf, wobei das Bremsgehäuse in zumindest einer axialen Richtung der Betätigungsdrehachse im wesentlichen mittels des Flanschelementes gebildet ist. Hierdurch ist es mit einfachen Mitteln möglich, ein stabiles Bremsgehäuse zu erzielen, das zum einen eine große Bauraumkompaktheit aufweist und welches zum anderen sehr montagefreundlich ist, da hinsichtlich des Innenraums des Bremsgehäuses durch das Flanschelement ein Verlierschutz bzw. eine Verliersicherung für in diesem Bremsgehäuse befindliche Teile möglich ist. Ferner sind das Flanschelement und das Gehäuseelement miteinander zur Bildung des Bremsgehäuses mittels Verschraubung, Vernietung oder Verklipsung verbunden. Hierdurch kann eine besonders stabile Anbindung bzw. eine besonders stabile Bauform des Bremsgehäuses erzielt werden.

Erfindungsgemäß ist es bevorzugt, dass das Gehäuseelement planparallele Seitenflächen parallel zur Haupterstreckungsebene des Gehäuseelementes aufweist. Hierdurch kann zum einen das Gehäuseelement besonders genau und maßtreu ausgebildet werden und zum anderen besonders einfach und kostengünstig hergestellt werden, weil es möglich ist, lediglich Plattenmaterial zur Bildung des Gehäuseelementes zu verwenden, wobei solches Plattenmaterial darüber hinaus nicht oder nur wenig umgeformt zu werden braucht.

Das Gehäuseelement weist wenigstens eine relativ zu den Seitenflächen um einen Neigungswinkel geneigte Funktionsfläche auf, wobei die Funktionsfläche eine feingestanzte Funktionsfläche ist und bevorzugt die Funktionsfläche zur Zusammenwirkung von Wälzkörpern vorgesehen ist bzw. der Neigungswinkel im wesentlichen ein rechter Winkel ist. Hierdurch ist es erfindungsgemäß vorteilhaft möglich, dass die Funktionsfläche mit vergleichsweise geringem Fertigungsaufwand besonders maßgenau und an die im Inneren des Bremsgehäuses befindlichen Elemente, insbesondere Wälzkörper, angebracht sein kann.

Erfindungsgemäß ist es weiterhin bevorzugt, dass die Verstellvorrichtung ein Schrittschaltwerk umfasst, insbesondere zur Verstellung eines Fahrzeugsitzes beispielsweise zur Sitzhöhen - und/oder zur Sitzneigungsverstellung.

Ein weiterer Gegenstand der vorliegenden Erfindung ist ein Verfahren zur Herstellung und/oder zur Montage einer erfindungsgemäßen Verstellvorrichtung, wobei in einem ersten Schritt das Gehäuseelement aus einem plattenförmigen Material gebildet wird, wobei bevorzugt eine Funktionsfläche feingestanzt wird, und wobei in einem zweiten Schritt das Gehäuseelement und das Flanschelement miteinander verbunden werden, insbesondere mittels Verschraubung, Vernietung oder Verklipsung. Hierdurch ist es in besonders montagefreundlicher und damit kostengünstiger Weise möglich, dass eine Verstellvorrichtung mit einem Verlierschutz für in dem Bremsgehäuse befindliche Elemente, insbesondere Wälzkörper oder dergleichen, ausgebildet ist, die zum einen einfach herstellbar ist, d.h. deren Elemente besonders leicht und einfach zusammenbaubar sind, und wobei ferner eine besonders leichte und einfache Montagemöglichkeit an der Kraftfahrzeugkomponente gegeben ist. Es ist insbesondere vorgesehen, dass zur Montage der Verstellvorrichtung an der Kraftfahrzeugkomponente das Flanschelement Verwendung findet, insbesondere mittels entsprechender Befestigungsöffnungen, die jedoch nicht den Kern der vorliegenden Erfindung betreffen.

Ausführungsbeispiele der Erfindung sind in den Zeichnungen dargestellt und in der nachfolgenden Beschreibung näher erläutert.

**Figur 1** zeigt in schematischer Seitenansicht ein Fahrzeugsitz als Beispiel einer Kraftfahrzeugkomponente mit einer schematisch angedeuteten Verstellvorrichtung.

**Figur 2** zeigt in perspektivischer Darstellung einen Teil der erfindungsgemäßen Verstellvorrichtung bzw. das Bremsgehäuse einer erfindungsgemäßen Verstellvorrichtung mit einem erfindungsgemäßen Gehäuseelement.

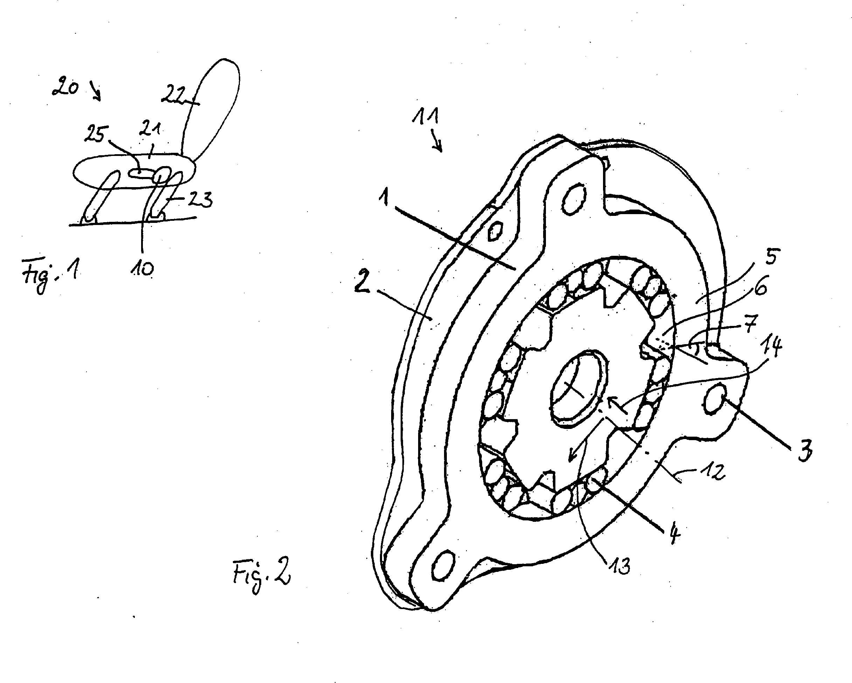

In **Figur 1** ist es in schematischer Seitendarstellung ein Kraftfahrzeug 20 als Beispiel einer Kraftfahrzeugkomponente 20 dargestellt. Beispielsweise weist der Fahrzeugsitz 20 ein Sitzteil 21 und ein Lehnenteil 22 auf. Beispielsweise mittels Lenker 23 kann der Fahrzeugsitz 20 beispielsweise neigungsverstellbar und/oder höhenverstellbar vorgesehen sein, wobei zur Verstellung der Lenker 23 eine erfindungsgemäße Verstellvorrichtung 10 mit einem lediglich schematisch dargestellten Betätigungselement 25 vorgesehen ist.

In **Figur 2** ist in perspektivischer Darstellung ein Bremsgehäuse 11 einer erfindungsgemäßen Verstellvorrichtung 10 dargestellt. Das Bremsgehäuse 11 weist ein Gebäuseelelement 1 auf. Weiterhin weist das Bremsgehäuse 11 ein Flanschelement 2 auf, welches auch als Flanschblech 2 bezeichnet wird. Die Verstellvorrichtung 10 weist erfindungsgemäß insbesondere ein als ein Schrittschaltwerk ausgeführte Verstellmechanik auf und umfasst eine Betätigungsdrehachse 12, wobei das Betätigungselement 25 (in Figur 2 nicht dargestellt) im wesentlichen durch eine rotative Bewegung um die Betätigungsdrehachse 12 oder um eine in räumlicher Nähe der Drehachse eine Betätigung der Verstellvorrichtung 10 bewirken kann, die ihrerseits zu einer Verstellung der Kraftfahrzeugkomponente 20, insbesondere des Fahrzeugsitzes 20 führt. Eine solche Verstellung ist insbesondere als eine Neigungsverstellung bzw. eine Höhenverstellung oder eine Neigungs- und Höhenverstellung vorgesehen. In einer zur Betätigungsdrehachse 12 radialen Richtung 13 wird die Verstellmechanik der Verstellvorrichtung 10 durch das Gehäuseelement 1 umgrenzt. Das Gehäuseelement 1 nimmt in diese Richtung insbesondere Bremskräfte, Klemmkräfte bzw. radial nach außen wirkende Kräfte auf und ist hinsichtlich seiner Dimensionen in der radialen Richtung 13 entsprechend ausgelegt. In einer axialen Richtung 14 bezüglich der Betätigungsdrehhachse 12 ist die Verstellmechanik der Verstellvorrichtung 10 durch das Flanschelement 2 bzw. das Flanschblech 2 begrenzt. Das Flanschelement 2 ist mit dem Gehäuseelement 1 insbesondere an Befestigungsstellen 3 (besonders bevorzugt drei oder mehrere Befestigungsstellen am Umfang des Gehäuseelementes 1, wobei bevorzugt eine äquidistante Verteilung der Befestigungsstellen 3 vorgesehen ist). Die Befestigungsstellen 3 bzw. Verbindungsstellen zwischen dem Gehäuseelement 1 und dem Flanschelement 2 sind beispielsweise mittels nicht dargestellter Verschraubungen oder Vemietungen oder Verklipsungen realisiert. Die Verstellmechanik weist erfindungsgemäß insbesondere Wälzkörper 4 auf, welche mit einer Funktionsfläche 6 im Inneren des Gehäuseelementes 1 zusammenwirken und die Funktionsfläche 6 weist herbei gegenüber einer Seitenfläche 5 des Gehäuseelementes 1 einen Neigungswinkel 7 auf, der bevorzugt ein rechter Winkel ist.

Die Funktionsfläche 6 ist insbesondere mittels eines Feinstanzvorgangs ausgehend von einem durchgängigen Plattenmaterial des Gehäuseelementes 1 gebildet. Zur Montage der Verstellvorrichtung bzw. des Gehäuseelementes mit dem Flanschelement 2 werden diese insbesondere an den Befestigungsstellen 3 miteinander verbunden, so dass die Verstellmechanik wirkungsvoll gegen ein Herausfallen gesichert ist, insbesondere die Wälzkörper 4. Mittels des Flanschelementes 2 kann die solchermaßen hergestellte Verstellvorrichtung 11 dann an der Kraftfahrzeugkomponente 20 insbesondere dem Fahrzeugsitz montiert werden.

### Bezugszeichenliste:

- 1: Gehäuseelement
- 2: Flanschelement
- 3: Befestigungsstelle
- 4: Wälzkörper
- 5: Seitenflächen des Gehäuseelementes
- 6: Funktionsfläche des Gehäuseelementes
- 7: Neigungswinkel der Verstellvorrichtung
- 10: Verstellvorrichtung
- 11: Bremsgehäuse
- 12: Betätigungsdrehachse
- 13: Radiale Richtung der Betätigungsdrehachse
- 14: Axiale Richtung der Betätigungsdrehhachse
- 20: Kraftfahrzeugkomponente / Fahrzeugsitz
- 21: Sitzteil
- 22: Lehnenteil
- 23: Lenker
- 25: Betätigungselement

## Patentansprüche

1. Verstellvorrichtung (10) für eine Kraftfahrzeugkomponente (20), insbesondere ein Fahrzeugsitz, wobei die Verstellvorrichtung (10) ein Bremsgehäuse (11) und eine Betätigungsdrehachse (12) aufweist, wobei das Bremsgehäuse (11) in radialer Richtung (13) der Betätigungsdrehachse (12) mittels eines im Wesentlichen plattenförmig verlaufenden Gehäuseelementes (1) gebildet ist, wobei im Inneren des plattenförmig verlaufenden Gehäuseelements Wälzkörper (4) angebracht sind, **dadurch gekennzeichnet, dass** das Bremsgehäuse (11) in zumindest einer axialen Richtung (14) der Betätigungsdrehachse (12) mittels eines Flanschelementes (2) gebildet ist, wobei das Flanschelement (2) und das Gehäuseelement (1) miteinander zur Bildung des Bremsgehäuses (11) mittels Verschraubung, Vernietung oder Verklipsung verbunden sind, wobei das Gehäuseelement (1) wenigstens eine relativ zu den Seitenflächen (5) um einen Neigungswinkel (7) geneigte Funktionsfläche (6) aufweist, wobei die wenigstens eine Funktionsfläche (6) eine feingestanzte Funktionsfläche (6) ist.

2. Verstellvorrichtung (10) nach Anspruch 1, **dadurch gekennzeichnet, dass** das Gehäuseelement (1) planparallele Seitenflächen (5) parallel zur Haupterstreckungsebene des Gehäuseelementes (1) aufweist.

3. Verstellvorrichtung (10) nach einem der vorhergehenden Ansprüche, **dadurch gekennzeichnet, dass** die Funktionsfläche (6) zur Zusammenwirkung mit den Wälzkörpern (4) vorgesehen ist.

4. Verstellvorrichtung (10) nach einem der vorhergehenden Ansprüche, **dadurch gekennzeichnet, dass** der Neigungswinkel (7) im Wesentlichen ein rechter Winkel ist.

5. Verstellvorrichtung (10) nach einem der vorhergehenden Ansprüche, **dadurch gekennzeichnet, dass** die Verstellvorrichtung (10) ein Schrittschaltwerk umfasst.

6. Verfahren zur Herstellung und/oder zur Montage einer Verstellvorrichtung (10) gemäß einem der Ansprüche 1 bis 5, **dadurch gekennzeichnet,**
- **dass** in einem ersten Schritt das Gehäuseelement (1) aus einem plattenförmigen Material gebildet wird, wobei bevorzugt eine Funktionsfläche (6) feingestanzt wird,
- **dass** in einem zweiten Schritt das Gehäuseelement (1) und das Flanschelement (2) miteinander verbunden werden, insbesondere mittels Verschraubung, Vernietung oder Verklipsung.

## Claims

1. Adjusting device (10) for a motor vehicle component (20), in particular a vehicle seat, wherein the adjusting device (10) has a brake housing (11) and an actuating rotational axis (12), wherein the brake housing (11) is formed by a housing element (1) extending essentially plate-shaped in a radial direction (13) from the actuating rotational axis (12), wherein rolling elements (4) are installed in the interior of the plate-shaped housing element (1), **characterised in that** the brake housing is formed (11) in at least one axial direction (14) of the actuating rotational axis (12) by means of a flange (2), wherein the flange (2) and the housing element (1) are connected together to form the brake housing (11) by means of screwing, riveting or snap-fitting, wherein the housing element (1) has at least one functional surface (6) inclined by an inclination angle (7) relative to the side surfaces (5), wherein the at least one functional surface (6) has a precision-stamped functional surface (6).

2. Adjusting device (10) according to claim 1, **characterised in that** the housing element (1) has plane-parallel side surfaces (5) parallel to the main extension plane of the housing element (1).

3. Adjusting device (10) according to one of the preceding claims, **characterised in that** the functional surface (6) is provided to interact with the rolling elements (4).

4. Adjusting device (10) according to one of the preceding claims, **characterised in that** the inclination angle (7) is substantially a right angle.

5. Adjusting device (10) according to one of the preceding claims, **characterised in that** the adjusting device (10) comprises a stepping mechanism.

6. Method for producing and / or for mounting an adjusting device (10) according to one of claims 1 to 5, **characterised in that**,
- in a first step the housing element (1) is formed from a sheet material, wherein preferably with one functional surface (6) is precision stamped,
- in a second step the housing member (1) and the flange (2) are joined together, in particular by means of screwing, riveting or snap-fitting.

## Revendications

1. Dispositif de réglage (10) pour un composant de véhicule à moteur (20), plus particulièrement un siège de véhicule, étant donné que le dispositif de réglage (10) possède un carter de frein (11) et un axe rotatif d'actionnement (12), dans lequel le carter de frein (11) est composé d'un boîtier (1) s'étendant, essentiellement en forme de plaque, radialement (13) par rapport à l'axe rotatif d'actionnement (12), des dispositifs de roulement (4) étant installés à l'intérieur de l'élément de carter en forme de plaque, **caractérisé en ce que** le carter de frein (11) est composé dans au moins une direction axiale (14) de l'axe rotatif d'actionnement (12) au moyen d'une bride (2), la bride (2) et le boîtier (1) étant vissés, rivetés ou emmanchés ou fixés par encliquetage l'un à l'autre en formant le carter de frein (11), le boîtier (1) présentant au moins une surface de fonctionnement (6) inclinée, par rapport aux surfaces latérales (5), d'un angle d'inclinaison (7), au moins une surface de fonctionnement (6) présente une surface de fonctionnement (6) découpée de précision.

2. Dispositif de réglage (10) selon la revendication 1, **caractérisé en ce que** le boîtier (1) présente des surfaces latérales (5) à plans parallèles, parallèlement au plan d'extension principal du boîtier (1).

3. Dispositif de réglage (10) selon l'une quelconque des revendications précédentes, **caractérisé en ce que** la surface de fonctionnement (6) est conçue pour interagir avec les corps de roulement (4).

4. Dispositif de réglage (10) selon l'une quelconque des revendications précédentes, **caractérisé en ce que** l'angle d'inclinaison (7) est essentiellement un angle droit.

5. Dispositif de réglage (10) selon l'une quelconque des revendications précédentes, **caractérisé en ce que** le dispositif de réglage (10) comprend un mécanisme à crans

6. Procédé pour la fabrication et/ou pour le montage d'un dispositif de réglage (10) selon l'une quelconque des revendications 1 à 5, **caractérisé en ce que**
- dans un premier temps, le boîtier (1) est formé à partir d'un matériau en tôle, une surface de fonctionnement (6) étant de préférence découpée de précision,
- dans un deuxième temps, le boîtier (1) et la bride (2) sont vissés, rivetés ou fixés par encliquetage l'un à l'autre.
